# EUROPÄISCHE PATENTSCHRIFT

(11) **EP 3 278 039 B1**
(45) Veröffentlichungstag und Bekanntmachung des Hinweises auf die Patenterteilung: **20.10.2021**
(21) Anmeldenummer: 16712889.1
(22) Anmeldetag: 31.03.2016
(51) Int. Cl.: F25B 39/00

(54) **WÄRMEÜBERTRAGER ODER CHILLER**
HEAT EXCHANGER OR CHILLER
ÉCHANGEUR DE CHALEUR OU ÉVAPORATEUR À FAISCEAU TUBULAIRE

(30) Priorität: 01.04.2015 DE 102015205933
(43) Veröffentlichungstag der Anmeldung: 07.02.2018
(73) Patentinhaber: Mahle International GmbH, 70376 Stuttgart (DE)
(72) Erfinder: FELDKELLER, Timo, 71679 Asperg (DE); WESNER, Markus, 70372 Stuttgart (DE)
(74) Vertreter: BRP Renaud & Partner mbB Rechtsanwälte Patentanwälte Steuerberater
(86) Internationale Anmeldenummer: PCT/EP2016/057006
(87) Internationale Veröffentlichungsnummer: WO 2016/156458

(56) Entgegenhaltungen:
- WO-A1-2014/048219
- DE-A1-102010 055 613
- DE-A1-102011 081 886
- DE-T5-112013 002 728

## Beschreibung

Die vorliegende Erfindung betrifft einen Wärmeübertrager oder einen Chiller in Scheibenbauweise, umfassend einen Wärmeübertragerblock, ein Expansionsventil sowie einen Anschlussflansch gemäß dem Oberbegriff des Anspruchs 1. Die Erfindung betrifft außerdem ein mit einem solchen Wärmeübertrager oder Chiller ausgestattetes Kraftfahrzeug.

Aus der DE 10 2011 008 653 A1 ist ein gattungsgemäßer Wärmeübertrager in Scheibenbauweise bekannt, umfassend einen Wärmeübertragerblock mit übereinander gestapelten Stapelscheiben, wobei zwischen diesen ein erster Fluidkanal für ein Kühlmittel und ein zweiter Fluidkanal für ein Kältemittel ausgebildet ist. Darüber hinaus ist ein thermostatisches Expansionsventil zur Regelung eines Massenstroms des Kältemittels vorgesehen sowie ein Anschlussflansch mit einem Einlasskanal und einem Auslasskanal für das Kältemittel, wobei der Einlasskanal in einem Übergangsbereich mit dem zweiten Fluidkanal des Wärmeübertragerblocks verbunden ist. Um dabei eine Bauhöhe reduzieren zu können, ist eine erste Ein- oder Auslassöffnung von einem Tauchrohr gebildet, wobei durch das Tauchrohr selbst das Kühlmittel in den ersten Fluidkanal einleitbar ist, so dass die erste Ein- und Auslassöffnung an der gleichen Seite des Wärmeübertragers ausgebildet werden können.

Aus der DE 10 2011 081 886 A1 ist ein weiterer gattungsgemäßer Wärmeübertrager bekannt.

Sogenannte Chiller bzw. Wärmeübertrager, mittels welchen ein Kühlmittel mit Hilfe eines verdampfenden Kältemittels abgekühlt wird, werden normalerweise mit einem thermostatischen Expansionsventil als Baueinheit ausgestattet. Dieses Expansionsventil reguliert dabei den Verdampfungsprozess über einen kältemittelseitigen Druckabfall sowie den sich daraus ändernden Massenstrom im Verdampfereintritt, so dass sich ein gewünschter Austrittszustand am Stapelscheibenwärmeübertrager einstellt. Die Regelung erfolgt beim thermostatischen Expansionsventil über die Ausdehnung eines Kältemittels in Abhängigkeit der Austrittstemperatur. Ein Einfluss von außen ist nicht möglich. Über eine Abschalteinheit kann der Kältemittelstrom unterbrochen werden.

Derartige Chiller werden insbesondere im Bereich einer Batteriekühlung eingesetzt, wobei in diesen Chillern das Kältemittel verdampft, das über Kältemittelleitungen mit einem Klimatisierungskreislauf eines Kraftfahrzeugs verbunden ist. Der Verdampfer im Klimatisierungskreislauf sowie der beschriebene Verdampfer sind dabei parallel geschaltet, wobei eine Aufteilung des Kältemittels auf die beiden Verdampfer durch zwei Expansionsventile geregelt wird, welche jeweils in Strömungsrichtung vor den eigentlichen Verdampfern sitzen.

Nachteilig bei den aus dem Stand der Technik bekannten Wärmeübertragern bzw. Chillern ist jedoch, dass diese vergleichsweise viele Schnittstellen und damit verbunden einen vergleichsweise hohen Montageaufwand erfordern. Darüber hinaus nehmen sie einen großen Bauraum ein und sind teuer. Wird lediglich eine Abschalteinheit verwendet, kann über diese lediglich eine Ein/Aus-Funktion realisiert werden, wodurch jedoch der Regelung Grenzen gesetzt sind.

Die vorliegende Erfindung beschäftigt sich daher mit dem Problem, für einen Wärmeübertrager oder einen Chiller der gattungsgemäßen Art eine verbesserte oder zumindest eine alternative Ausführungsform anzugeben, welche sich insbesondere durch einen geringeren Bauraumbedarf, eine exakte Regelung sowie reduzierte Kosten auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Anschlussflansch eines Wärmeübertragers oder eines Chillers mit einer speziellen Einstecköffnung zu versehen, in welche ein elektronisches Expansionsventil direkt eingesteckt werden kann, ohne dass hierfür die Montage separater Leitungen oder eines weiteren Flansches erforderlich ist. Der erfindungsgemäße Wärmeübertrager oder Chiller umfasst dabei einen Wärmeübertragerblock mit einem ersten Fluidkanal für ein Kühlmittel und einem zweiten Fluidkanal für ein Kältemittel. Der Wärmeübertragerblock kann dabei beispielsweise eine Vielzahl übereinander gestapelter Stapelscheiben aufweisen, wobei zwischen den Stapelscheiben der erste Fluidkanal für das Kühlmittel und der zweite Fluidkanal für das Kältemittel ausgebildet ist. Alternativ kann der Wärmeübertragerblock auch als Flachrohrwärmeübertrager ausgebildet und demzufolge eine Vielzahl von Flachrohren aufweisen, in denen der zweite Fluidkanal für das Kältemittel ausgebildet ist, wogegen der erste Fluidkanal für das Kühlmittel um die Flachrohre herum ausgebildet ist. Des Weiteren vorgesehen sind ein Expansionsventil zur Beeinflussung eines Massenstroms des Kältemittels sowie ein Anschlussflansch mit einem Einlasskanal und einem Auslasskanal für das Kältemittel, wobei der Einlasskanal in einem Übergangsbereich mit dem zweiten Fluidkanal des Wärmeübertragerblocks verbunden ist. Erfindungsgemäß ist nun das Expansionsventil als elektronisches Expansionsventil ausgebildet und ermöglicht dadurch eine äußerst genaue und präzise Regelung des Massenstroms des Kältemittels, wobei darüber hinaus der Anschlussflansch eine mit dem Übergangsbereich des Einlassventils kommunizierende Einstecköffnung aufweist, in welche das Expansionsventil derart einsteckbar ist, dass es einen Massenstrom des Kältemittels im Übergangsbereich reguliert und ein Verdampfen des Kältemittels erst im zweiten Fluidkanal des Wärmeübertragers/Chillers, das heißt im Wärmeübertragerblock, erfolgt. Im Vergleich zu bisherigen Expansionsventilen, welche üblicherweise lediglich eine Ein/Aus-Funktion ermöglicht hatten, kann durch das elektronische Expansionsventil eine besonders exakte und bedarfsgerechte Regulierung des Kältemittelstroms erreicht werden. Durch die Einsteckmöglichkeit des elektronischen Expansionsventils in die am Anschlussflansch angeordnete Einstecköffnung kann darüber hinaus auf den bisher am Expansionsventil separat vorgesehenen Flansch verzichtet werden, wodurch sich nicht nur das Gewicht des Expansionsventils erheblich reduziert, sondern auch der Montageaufwand des Expansionsventils am Wärmeübertrager bzw. Chiller. Durch den Wegfall des Flansches des Expansionsventils und die Integration des Expansionsventils in den Anschlussflansch kann auch der erforderliche Bauraumbedarf deutlich reduziert werden, was insbesondere in modernen Motorräumen einen erheblichen Vorteil darstellt. Ganz nebenbei kann auch noch der Wirkungsgrad des erfindungsgemäßen Wärmeübertragers bzw. Chillers gesteigert werden, da durch das einsteckbare Expansionsventil ein Verdampfen des Kältemittels erst im Wärmeübertragerblock des Chillers erfolgt und nicht bereits extern oder in einem externen Flansch, so dass die Kühlung der bislang extern angeordneten Komponenten nicht mehr erfolgt, was dahingehend vorteilhaft ist, dass die Kühlenergie ausschließlich zum Kühlen des Kühlmittels im Wärmeübertragerblock verwendet werden kann und nicht bereits vorher extern abgegeben wird. Erreicht wird dadurch, dass das Expansionsventil bis an die Grenze zum Wärmeübertragerblock in den Anschlussflansch eingesteckt wird.

Bei einer vorteilhaften Weiterbildung der erfindungsgemäßen Lösung ist das elektronische Expansionsventil lösbar in der Einstecköffnung befestigt, insbesondere über einen Bajonettverschluss oder eine Schraubverbindung. Besonders ein derartiger Bajonettverschluss bietet die Möglichkeit einer erheblich vereinfachten Montage und Demontage, wobei der Bajonettverschluss selbstverständlich so ausgebildet ist, dass er absolut dicht ist und dadurch ein unbeabsichtigtes Entweichen von Kältemittel zuverlässig unterbunden wird. Zusätzlich kann der Bajonettverschluss mittels eines Sicherungselementes an einem unbeabsichtigten Lösen gehindert werden. Alternativ ist auch eine Schraubverbindung vorstellbar, über welche das in die Einstecköffnung eingesteckte Expansionsventil am Anschlussflansch fixiert wird.

Bei einer alternativen Ausführungsform der erfindungsgemäßen Lösung ist das Expansionsventil unlösbar in der Einstecköffnung befestigt, insbesondere stoff-oder reibschlüssig mit dem Anschlussflansch verbunden. Dies bietet wiederum den besonderen Vorteil, dass das elektronische Expansionsventil vergleichsweise einfach aber dennoch dicht und fest in der Einstecköffnung fixiert werden kann.

Bei einer weiteren vorteilhaften Ausführungsform der erfindungsgemäßen Lösung ist stromauf des Expansionsventils eine Filtereinrichtung vorgesehen. Eine derartige Filtereinrichtung schützt das Expansionsventil vor Schwebstoffen, die unter Umständen eine Beeinträchtigung der Funktion des elektronischen Expansionsventils bewirken können.

Bei einer vorteilhaften Weiterbildung der erfindungsgemäßen Lösung ist die Filtereinrichtung in dem Anschlussflansch angeordnet. Um eine weitergehende Bauraumoptimierung erreichen zu können, kann neben dem elektronischen Expansionsventil zusätzlich auch die Filtereinrichtung in dem Anschlussflansch angeordnet, dass heißt in diesem integriert werden.

Bei einer weiteren vorteilhaften Ausführungsform der erfindungsgemäßen Lösung weist das Expansionsventil einen Stator, ein fest darin angeordnetes Rotorgehäuse sowie einen im Rotorgehäuse drehbar angeordneten Rotor auf, wobei der Stator, das Rotorgehäuse und der Rotor eine Baueinheit bilden. Hierdurch ist es möglich, das Expansionsventil komplett, das heißt zusammen mit dem Stator, dem Rotorgehäuse und dem Rotor in die Einstecköffnung am Anschlussflansch einzustecken und dort zu montieren. Hierdurch kann die Montage des elektronischen Expansionsventils deutlich vereinfacht werden.

Die vorliegende Erfindung beruht weiter auf dem allgemeinen Gedanken, ein Kraftfahrzeug mit einem zuvor beschriebenen Wärmeübertrager oder Chiller auszustatten. Der zuvor beschriebene Wärmeübertrager bzw. Chiller kann insbesondere zur Batteriekühlung eingesetzt werden, was von wesentlicher Bedeutung ist, sofern das Kraftfahrzeug als Hybrid- oder als Elektrofahrzeug ausgebildet ist. Da zur vollen Leistungsentfaltung eine möglichst optimale Batterietemperatur gehalten werden muss, muss diese gegebenenfalls gekühlt oder beheizt werden, was mittels des erfindungsgemäßen Wärmeübertragers bzw. Chillers möglich ist.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

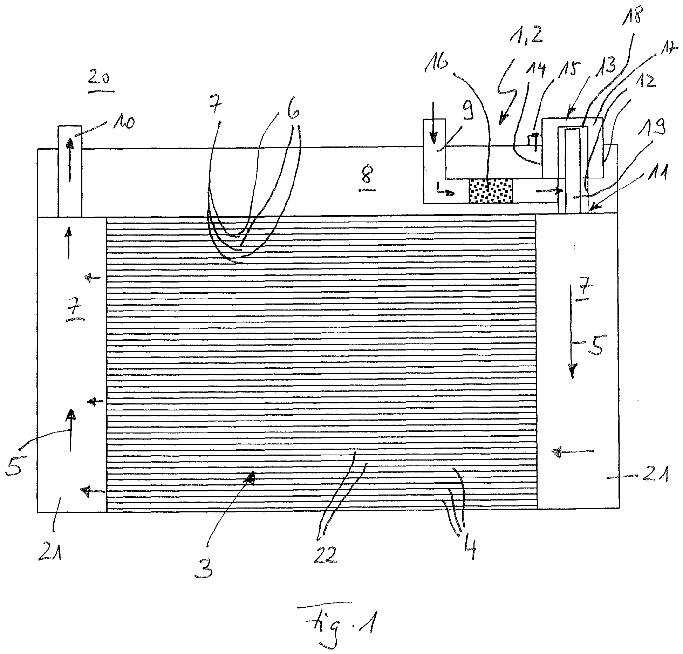

Die einzige Figur 1 zeigt eine Schnittdarstellung durch einen erfindungsgemäßen Wärmeübertrager oder Chiller.

Entsprechend der Figur 1 weist ein erfindungsgemäßer Wärmeübertrager 1 oder Chiller 2 einen Wärmeübertragerblock 3 auf, der im gezeichneten Fall als Flachrohrwärmeübertrager ausgebildet ist und demzufolge eine Vielzahl von Flachrohren 4 aufweisen, in denen ein zweiter Fluidkanal 7 für ein Kältemittel 5 ausgebildet ist, wogegen ein erste Fluidkanal 6 für das Kühlmittel um die Flachrohre 4 herum ausgebildet ist. In diesem Fall wäre rechts und links ein Sammler 21 angeordnet.

Alternativ kann der Wärmeübertragerblock 3 selbstverständlich auch als Stapelscheibenwärmeübertrager mit übereinander gestapelten Stapelscheiben 22 ausgebildet sein, zwischen denen dann der erste Fluidkanal 6 für das Kühlmittel sowie der zweite Fluidkanal 7 für das Kältemittel 5 verläuft. Darüber hinaus ist ein Anschlussflansch 8 mit einem Einlasskanal 9 und einem Auslasskanal 10 für das Kältemittel 5 vorgesehen, wobei der Einlasskanal 9 in einem Übergangsbereich 11 mit dem zweiten Fluidkanal 7 verbunden ist. Erfindungsgemäß weist nun der Anschlussflansch 8 eine mit dem Übergangsbereich 11 des Einlasskanals 9 kommunizierende Einstecköffnung 12 auf, in welche ein elektronisches Expansionsventil 13 derart weit eingesteckt ist, dass es einen Massenstrom des Kältemittels 5 im Übergangsbereich 11 reguliert und dadurch ein Verdampfen des Kältemittels 5 erst im zweiten Fluidkanal 7 bzw. im Wärmeübertragerblock 3 des Wärmeübertrager/Chillers 1, 2 erzwingt. Durch die Ausbildung des Expansionsventils als elektronisches Expansionsventil 13 kann eine besonders exakte Steuerung und Regelung der Kühlleistung des Wärmeübertragers 1 bzw. des Chillers 2 erreicht werden.

Durch die Integration des elektronischen Expansionsventils 13 in die Einstecköffnung 12 des Anschlussflansches 8 kann darüber hinaus die erforderliche Bauhöhe des Wärmeübertragers 1 bzw. des Chillers 2 erheblich reduziert werden, ebenso wie ein Gewicht, da der bisher am Expansionsventil 13 separat anzuordnende Flansch nunmehr entfallen kann. Wie der Figur 1 dabei zu entnehmen ist, ist das elektronische Expansionsventil 13 über ca. zwei Drittel seiner Höhe in dem Anschlussflansch 8 angeordnet, und steht lediglich noch marginal über diesen über. Selbstverständlich ist alternativ auch eine vollständige Integration in dem Raum des Anschlussflansches 8 denkbar.

Durch die direkt am Übergangsbereich 11 angeordnete Ventilfunktion kann ein unerwünschtes Verdampfen des Kältemittels 5 im Anschlussflansch 8 oder sogar extern davon zuverlässig verhindert werden, wodurch die Leistung des Wärmeübertragers 1 bzw. des Chillers 2 ebenfalls gesteigert werden kann, da sich die durch die Expansion des Kältemittels 5 verursachte Kühlung erst im Wärmeübertragerblock 3 entfaltet.

Das Expansionsventil 13 kann dabei lösbar in der Einstecköffnung 12 befestigt sein, insbesondere über einen Bajonettverschluss 14 oder eine Schraubverbindung 15. Beide mögliche Verbindungen ermöglichen dabei sowohl eine einfache Montage als auch eine einfache Demontage und damit eine deutlich verbesserte Reparatur- und Wartungsfreundlichkeit. Sowohl über die Schraubverbindung 15 als auch über den Bajonettverschluss 14 ist das Expansionsventil 13 drehfest am Anschlussflansch 8 angebunden. Alternativ hierzu kann selbstverständlich auch vorgesehen sein, dass das Expansionsventil 13 unlösbar in der Einstecköffnung 12 befestigt ist, insbesondere stoff- oder reibschlüssig mit dem Anschlussflansch 8 verbunden wird.

Um das Expansionsventil 13 vor Beschädigungen schützen zu können, kann stromauf desselben in dem Einlasskanal 9 eine Filtereinrichtung 16 vorgesehen werden, wobei diese ebenfalls vorzugsweise in den Bauraum des Anschlussflansches 8 integriert wird, jedoch selbstverständlich alternativ auch extern zum Wärmeübertrager 1 bzw. zum Chiller 2 angeordnet werden kann.

Betrachtet man das erfindungsgemäße elektronische Expansionsventil 13 näher, so kann man erkennen, dass dies einen Stator 17, ein Rotorgehäuse 18 sowie einen drehbar darin gelagerten Rotor 19 umfasst, wobei der Stator 17, das Rotorgehäuse 18 sowie der Rotor 19 vorzugsweise eine Baueinheit bilden, so dass das Expansionsventil 13 komplett, das heißt mit Stator 17, Rotorgehäuse 18 und Rotor 19 in die Einstecköffnung 12 am Anschlussflansch 8 eingebaut werden kann.

Mit dem erfindungsgemäßen Wärmeübertrager 1 bzw. dem Chiller 2 kann insbesondere eine verbesserte Batteriekühlung erreicht werden, so dass diese Komponenten vorzugsweise in einem Kraftfahrzeug 20 eingesetzt sind, welches beispielsweise als Hybridfahrzeug oder als Elektrofahrzeug ausgebildet ist.

Mit dem erfindungsgemäßen Wärmeübertrager 1 bzw. Chiller 2 lassen sich die Anzahl der Schnittstellen reduzieren, ebenso wie ein Montageaufwand, ein erforderliches Bauraumvolumen, das Gewicht sowie die Kosten. Auf der anderen Seite kann eine erhöhte Leistung und eine verbesserte Regelbarkeit erreicht werden.

## Patentansprüche

1. Wärmeübertrager (1) oder Chiller (2), umfassend
- einen Wärmeübertragerblock (3) mit einem erstem Fluidkanal (6) für ein Kühlmittel und einem zweiten Fluidkanal (7) für ein Kältemittel (5),
- ein Expansionsventil zur Regelung eines Massenstroms des Kältemittels (5), das als elektronisches Expansionsventil (13) ausgebildet ist,
- einen Anschlussflansch (8) mit einem Einlasskanal (9) und einem Auslasskanal (10) für das Kältemittel (5), wobei der Einlasskanal (9) in einem Übergangsbereich (11) mit dem zweiten Fluidkanal (7) verbunden ist,
**dadurch gekennzeichnet,**
- **dass** der Anschlussflansch (8) eine mit dem Übergangsbereich (11) des Einlasskanals (9) kommunizierende Einstecköffnung (12) aufweist, in welche das Expansionsventil (13) derart eingesteckt ist, dass es einen Massenstrom des Kältemittels (5) im Übergangsbereich (11) reguliert und ein Verdampfen des Kältemittels (5) erst im zweiten Fluidkanal (7) des Wärmeübertragers/Chillers (1,2) erfolgt.

2. Wärmeübertrager oder Chiller nach Anspruch 1,
**dadurch gekennzeichnet,**
**dass** das Expansionsventil (13) lösbar in der Einstecköffnung (12) befestigt ist, insbesondere über einen Bajonettverschluss (14) oder eine Schraubverbindung (15).

3. Wärmeübertrager oder Chiller nach Anspruch 1,
**dadurch gekennzeichnet,**
**dass** das Expansionsventil (13) unlösbar in der Einstecköffnung (12) befestigt ist, insbesondere stoff- oder reibschlüssig mit dem Anschlussflansch (8) verbunden ist.

4. Wärmeübertrager oder Chiller nach einem der Ansprüche 1 bis 3,
**dadurch gekennzeichnet,**
**dass** stromauf des Expansionsventils (13) eine Filtereinrichtung (16) vorgesehen ist.

5. Wärmeübertrager oder Chiller nach Anspruch 4,
**dadurch gekennzeichnet,**
**dass** die Filtereinrichtung (16) in dem Anschlussflansch (8) angeordnet ist.

6. Wärmeübertrager oder Chiller nach einem der Ansprüche 1 bis 5,
**dadurch gekennzeichnet,**
**dass** das Expansionsventil (13) einen Stator (17), ein fest darin angeordnetes Rotorgehäuse (18) sowie einen im Rotorgehäuse (18) angeordneten Rotor (19) aufweist, wobei der Stator (17), das Rotorgehäuse (18) und der Rotor (19) eine Baueinheit bilden.

7. Wärmeübertrager oder Chiller nach einem der Ansprüche 1 bis 6,
**dadurch gekennzeichnet,**
**dass** das Expansionsventil (13) drehfest am Anschlussflansch (8) angebunden ist.

8. Wärmeübertrager oder Chiller nach einem der Ansprüche 1 bis 7,
**dadurch gekennzeichnet,**
- **dass** der Wärmeübertragerblock (3) als Flachrohrwärmeübertrager ausgebildet ist und eine Vielzahl von Flachrohren (4) aufweist, in denen der zweite Fluidkanal (7) für das Kältemittel (5) ausgebildet ist, wogegen der erste Fluidkanal (6) für das Kühlmittel um die Flachrohre (4) herum ausgebildet ist und wobei die Flachrohre (4) längsendseitig in einem Sammler (21) gefangen sind, oder
- **dass** der Wärmeübertragerblock (3) als Stapelscheibenwärmeübertrager mit übereinander gestapelten Stapelscheiben (22) ausgebildet ist, zwischen denen der erste Fluidkanal (6) für das Kühlmittel sowie der zweite Fluidkanal (7) für das Kältemittel (5) verlaufen.

9. Kraftfahrzeug (20) mit einer Wärmeübertrager (1) oder Chiller (2) nach einem der vorhergehenden Ansprüche.

## Claims

1. Heat exchanger (1) or chiller (2), comprising
- a heat exchanger block (3) having a first fluid duct (6) for a coolant and a second fluid duct (7) for a refrigerant (5),
- an expansion valve for regulating a mass flow of the refrigerant (5) which is in the form of an electronic expansion valve (13),
- a connecting flange (8) with an inlet duct (9) and an outlet duct (10) for the refrigerant (5), wherein the inlet duct (9) is connected in a transition region (11) to the second fluid duct (7),
**characterised in**
- **that** the connecting flange (8) has a plug-in opening (12) communicating with the transition region (11) of the inlet duct (9), into which the expansion valve (13) is plugged such that it regulates a mass flow of the refrigerant (5) in the transition region (11) and an evaporation of the refrigerant (5) takes place only in the second fluid duct (7) of the heat exchanger/chiller (1, 2).

2. Heat exchanger or chiller according to claim 1,
**characterised in**
**that** the expansion valve (13) is fastened releasably in the plug-in opening (12), particularly via a bayonet connection (14) or a screw connection (15).

3. Heat exchanger or chiller according to claim 1,
**characterised in**
**that** the expansion valve (13) is fastened non-releasably in the plug-in opening (12), in particular is connected in a material-fitting or frictionally-fitting manner to the connecting flange (8).

4. Heat exchanger or chiller according to any of claims 1 to 3,
**characterised in**
**that** a filter device (16) is provided upstream of the expansion valve (13).

5. Heat exchanger or chiller according to claim 4,
**characterised in**
**that** the filter device (16) is arranged in the connecting flange (8).

6. Heat exchanger or chiller according to any of claims 1 to 5,
**characterised in**
**that** the expansion valve (13) has a stator (17), a rotor housing (18) arranged fixedly therein, as well as a rotor (19) arranged in the rotor housing (18), wherein the stator (17), the rotor housing (18) and the rotor (19) form a construction unit.

7. Heat exchanger or chiller according to any of claims 1 to 6,
**characterised in**
**that** the expansion valve (13) is connected non-rotationally to the connecting flange (8).

8. Heat exchanger or chiller according to any of claims 1 to 7,
**characterised in**
- **that** the heat exchanger block (3) is in the form of a flat tube heat exchanger and has a multiplicity of flat tubes (4) in which the second fluid duct (7) for the refrigerant (5) is formed, in contrast to which the first fluid duct (6) for the coolant is formed around the flat tubes (4) and wherein the flat tubes are captured at their longitudinal ends in a collector (21), or
- **that** the heat exchanger block (3) is in the form of a stacked disc heat exchanger having stacked discs (22) stacked above one another, between which the first fluid duct (6) for the coolant as well as the second fluid duct (7) for the refrigerant (5) run.

9. Motor vehicle (20) having a heat exchanger (1) or chiller (2) according to any of the preceding claims.

## Revendications

1. Échangeur de chaleur (1) ou évaporateur à faisceau tubulaire (2), comprenant
- un bloc d'échangeur de chaleur (3) avec un premier canal fluidique (6) pour un moyen de refroidissement et un second canal fluidique (7) pour un moyen frigorigène (5),
- une soupape d'expansion pour la régulation d'un courant massique du moyen frigorigène (5), qui est réalisé comme soupape d'expansion (13) électronique,
- une bride de raccordement (8) avec un canal d'entrée (9) et un canal de sortie (10) pour le moyen frigorigène (5), dans lequel le canal d'entrée (9) est relié dans une zone de transition (11) au second canal fluidique (7),
**caractérisé en ce**
- **que** la bride de raccordement (8) présente une ouverture d'insertion (12) communiquant avec la zone de transition (11) du canal d'entrée (9), dans laquelle la soupape d'expansion (13) est insérée de telle manière qu'elle régule un courant massique du moyen frigorigène (5) dans la zone de transition (11) et une évaporation du moyen frigorigène (5) n'est effectuée que dans le second canal fluidique (7) de l'échangeur de chaleur/l'évaporateur à faisceau tubulaire (1, 2).

2. Échangeur de chaleur ou évaporateur à faisceau tubulaire selon la revendication 1,
**caractérisé en ce**
**que** la soupape d'expansion (13) est fixée de manière détachable dans l'ouverture d'insertion (12), en particulier par le biais d'une fermeture à baïonnette (14) ou d'une liaison par vissage (15).

3. Échangeur de chaleur ou évaporateur à faisceau tubulaire selon la revendication 1,
**caractérisé en ce**
**que** la soupape d'expansion (13) est fixée de manière non détachable dans l'ouverture d'insertion (12), est reliée en particulier par matière ou par friction à la bride de raccordement (8).

4. Échangeur de chaleur ou évaporateur à faisceau tubulaire selon l'une quelconque des revendications 1 à 3,
**caractérisé en ce**
**qu'**un dispositif de filtre (16) est prévu en amont de la soupape d'expansion (13).

5. Échangeur de chaleur ou évaporateur à faisceau tubulaire selon la revendication 4,
**caractérisé en ce**
**que** le dispositif de filtre (16) est agencé dans la bride de raccordement (8).

6. Échangeur de chaleur ou évaporateur à faisceau tubulaire selon l'une quelconque des revendications 1 à 5,
**caractérisé en ce**
**que** la soupape d'expansion (13) présente un stator (17), un boîtier de rotor (18) agencé fixement dans celui-ci ainsi qu'un rotor (19) agencé dans le boîtier de rotor (18), dans lequel le stator (17), le boîtier de rotor (18) et le rotor (19) forment une unité structurelle.

7. Échangeur de chaleur ou évaporateur à faisceau tubulaire selon l'une quelconque des revendications 1 à 6,
**caractérisé en ce**
**que** la soupape d'expansion (13) est liée sans pouvoir tourner à la bride de raccordement (8).

8. Échangeur de chaleur ou évaporateur à faisceau tubulaire selon l'une quelconque des revendications 1 à 7,
**caractérisé en ce**
- **que** le bloc d'échangeur de chaleur (3) est réalisé comme échangeur de chaleur à tubes plats et présente une pluralité de tubes plats (4), dans lesquels le second canal fluidique (7) est réalisé pour le moyen frigorigène (5), alors que le premier canal fluidique (6) est réalisé pour le moyen de refroidissement autour des tubes plats (4) et dans lequel les tubes plats (4) sont coincés côté extrémité longitudinale dans un collecteur (21), ou
- **que** le bloc d'échangeur de chaleur (3) est réalisé comme échangeur de chaleur à plaques empilées avec des plaques empilées (22) empilées les unes au-dessus des autres, entre lesquelles s'étendent le premier canal fluidique (6) pour le moyen de refroidissement ainsi que le second canal fluidique (7) pour le moyen frigorigène (5).

9. Véhicule automobile (20) avec un échangeur de chaleur (1) ou évaporateur à faisceau tubulaire (2) selon l'une quelconque des revendications précédentes.
